**Europäisches Patentamt**

**European Patent Office**

**Office européen des brevets**

(19)

(11) Numéro de publication: **0 032 862**
**B1**

(12) # FASCICULE DE BREVET EUROPEEN

(45) Date de publication du fascicule du brevet:
**25.04.84**

(51) Int. Cl.³: **G 06 F 3/04**

(21) Numéro de dépôt: **81400061.8**

(22) Date de dépôt: **19.01.81**

(54) **Dispositif pour superposer les phases successives du transfert des informations entre plusieurs unités d'un système de traitement de l'information.**

(30) Priorité: **21.01.80 FR 8001213**

(43) Date de publication de la demande:
**29.07.81 Bulletin 81/30**

(45) Mention de la délivrance du brevet:
**25.04.84 Bulletin 84/17**

(84) Etats contractants désignés:
**DE FR GB IT NL**

(56) Documents cités:
**DE - A - 2 900 380**
**FR - A - 2 316 660**
**FR - A - 2 407 522**
**US - A - 4 096 569**

**COMPUTER DESIGN, vol. 18, no. 11 novembre 1979,**
**Concord (US) HOJBERG: "Queue handling arbiter**
**solves shared resource conflicts", pages 129-135**

(73) Titulaire: **COMPAGNIE INTERNATIONALE POUR L'INFORMATIQUE CII - HONEYWELL BULL (dite CII-HB), 94, avenue Gambetta, F-75020 Paris (FR)**

(72) Inventeur: **Vinot, Daniel René, 94 avenue Gambetta, F-75020 Paris (FR)**

BUNDESDRUCKEREI BERLIN

# 0 032 862

### Dispositif pour superposer les phases successives du transfert des informations entre plusieurs unités d'un système de traitement de l'information

La présente invention concerne un dispositif pour superposer les phases successives du transfert des informations entre plusieurs unités d'un système de traitement de l'information.

Elle concerne plus particulièrement un système de traitement de l'information comportant plusieurs processeurs individuels et au moins une mémoire centrale à laquelle chaque processeur est connectable par un système de voies de transmission d'informations encore dénommées bus, la liaison entre chaque processeur et une mémoire s'effectuant sans l'intermédiaire d'un autre processeur.

Dans un système de traitement de l'information du type spécifié, le bus de transfert a pour but de transmettre les informations entre une unité émettrice et une unité réceptrice du système.

Le système comprend une logique de commande du bus qui prend en charge toutes les demandes émanants des unités et relatives à l'utilisation du bus de transfert. L'utilisation de ce bus s'effectue selon une priorité fixe. Chaque unité reçoit une priorité fixe et en cas de demandes simultanées, le circuit prioritaire prend en charge la demande émanant de l'unité ayant la priorité la plus élevée. La logique de commande du bus peut communiquer avec toutes les unités du système afin de fournir certaines informations et certains signaux sur l'état et l'historique du système.

Ce système connu présente au moins deux inconvénients. En cas de panne de la logique de commande du bus qui est unique, l'ensemble des autres unités du système s'arrêtent de fonctionner. D'autre part, la mise en communication des unités émettrices et réceptrices s'exécute par un échange de signaux d'adresse et d'accusé de réception qui prend du temps.

Une solution à ces problèmes consiste à disposer les logiques de commandes du bus de transmission dans chaque unité importante du système en raison d'une seule par unité. Chaque logique de commande prend en charge toutes les demandes émanant des unités connectées au bus de transmission ainsi que les demandes provenant de l'unité particulière dans laquelle elle se trouve située et relatives à l'utilisation du bus de transmission. Chaque unité reçoit une priorité fixe lui permettant d'utiliser le bus de transmission selon un ordre prioritaire. Toutes les logiques de commande sont munies du même circuit de priorité pour localiser la demande émanant de l'unité ayant la priorité la plus élevée. Ainsi, toutes les unités ont connaissance de l'ensemble des unités demanderesses et chaque unité peut à l'aide de sa logique de commande se reconnaître comme étant la plus prioritaire pour obtenir la maîtrise du bus de transmission. Grâce à ce dispositif, la panne d'une logique de commande n'entrave plus le fonctionnement des autres unités. Seule, l'unité en panne interrompt ses échanges avec les autres. Il n'est plus nécessaire d'attendre l'accusé de réception de l'unité interrogée, puisque l'autorisation de transfert est à la fois produite localement et connue par l'ensemble des autres unités. Seulement pour obtenir de bonnes performances au niveau du nombre des échanges des informations sur le bus de transmission, il est nécessaire de trouver une solution permettant de multiplexer les informations échangées entre unités à la fois dans l'espace et dans le temps.

La présente invention telle qu'elle est caractérisée dans les revendications apporte une solution à ce problème. Selon l'invention chaque opération entre deux unités peut demander une à deux phases et les opérations entre les différentes unités sont réalisées par un multiplexage de ces phases sur le bus de transmission. Le dispositif de l'invention permet de superposer les phases concernant des unités différentes pourvu qu'il n'y ait pas utilisation simultanée du même champ du bus. (champs adresse, commande et données). Pour piloter cette superposition, chaque unité envoie à l'avance un statut qui définit la façon dont elle compte utiliser les champs pour les cycles suivants. L'attribution du bus sera faite à telle ou telle unité en fonction de ces status.

La présente invention sera mieux comprise à l'aide de la description faite au regard des dessins qui va suivre.

La figure 1 est un schéma de principe de l'organisation d'un système selon l'invention.

La figure 2 montre l'organisation d'un système particulier dans lequel s'applique l'invention.

La figure 3 est une représentation des éléments constitutifs d'une logique de commande selon l'invention.

La figure 4 est une représentation du circuit de priorité constituant la logique de commande.

La figure 5 est une représentation des liaisons de la logique de commande avec l'organe de commande d'une unité quelconque constituant le système de traitement de l'information.

La figure 6 représente le séquenceur utilisé dans chaque unité pour exécuter un séquence START.

La figure 7 représente le séquenceur utilisé dans chaque unité pour réexécuter une séquence REPONSE.

La figure 8 est un diagramme montrant les étapes de traitement de l'information successive nécessaires à l'élection d'une demande dans une unité en fonction du type de cette unité.

Les figures 9 et 13 représentent les circuit T de chaque logique de commande.

La figure 14 est un diagramme des temps montrant les opérations effectuées lors d'une opération d'écriture d'un mot en mémoire centrale MMU de la figure 2.

La figure 15 est un diagramme des temps montrant les opérations d'écriture de deux mots dans un cache MCU de la figure 2.

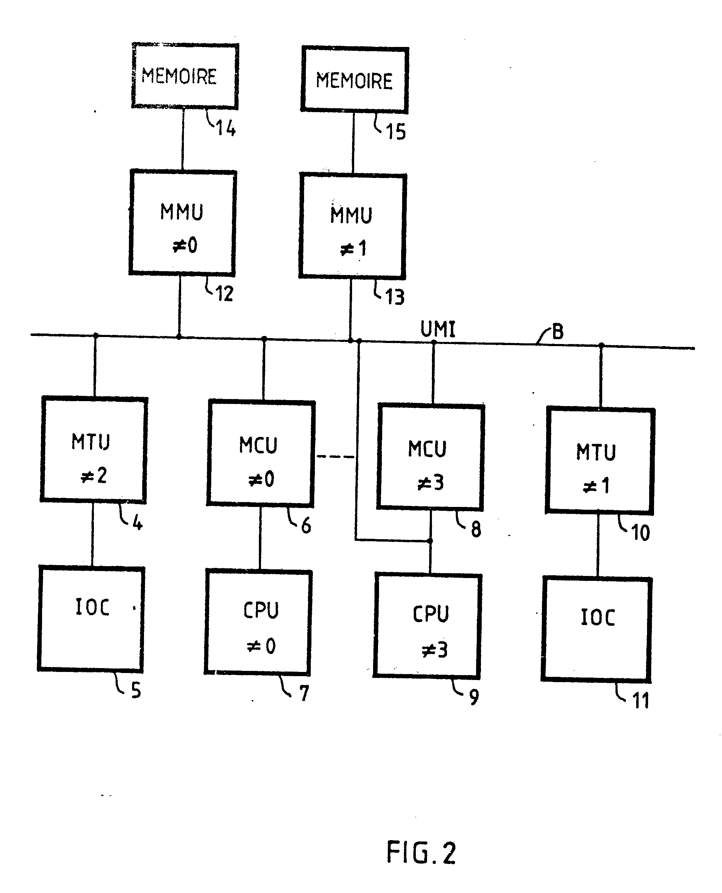

La figure 16 est un diagramme des temps représentant les opérations effectuées lors de l'écriture de

2

quatre mots dans une mémoire MMU de la figure 2.

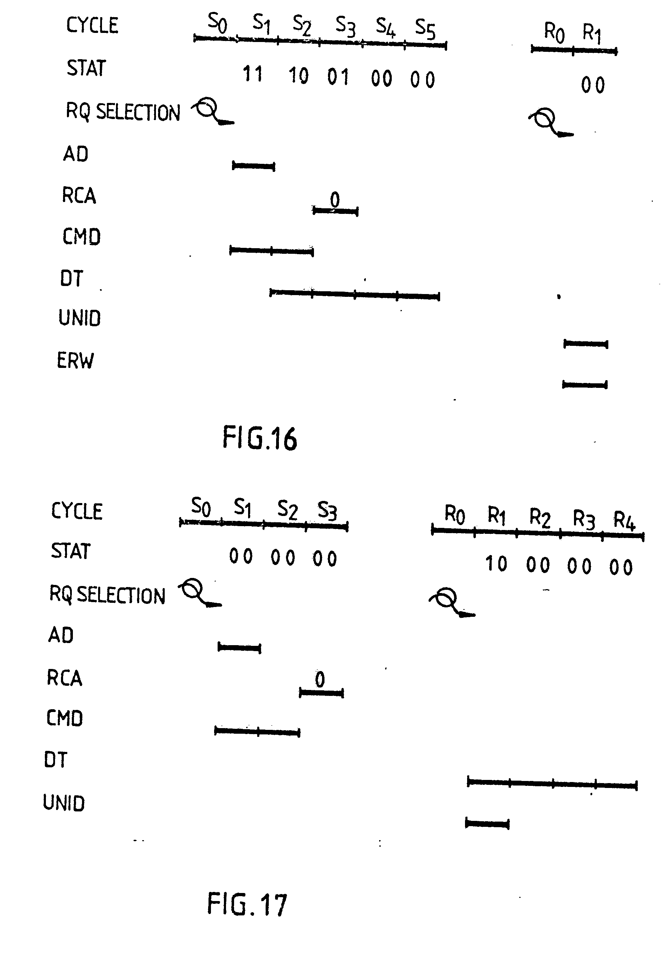

La figure 17 est un diagramme des temps représentant les opérations effectuées lors de la lecture de quatre mots dans la mémoire MMU de la figure 2.

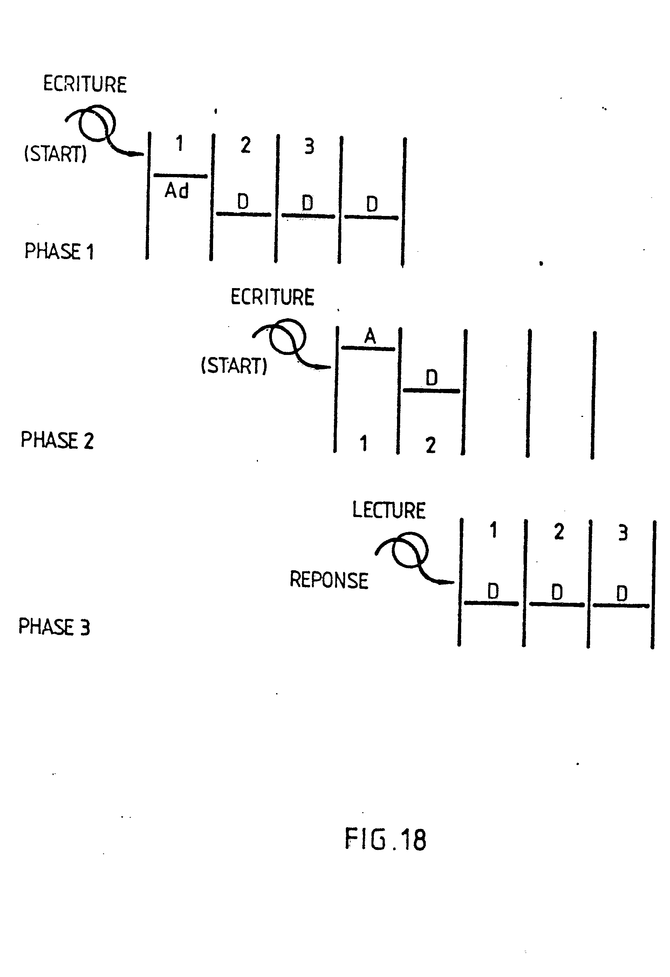

La figure 18 donne un exemple de multiplexage dans le temps et dans l'espace des lignes d'adresses et de données du bus de transmission pour 2 phases START sucessives suivies d'une phase REPONSE.

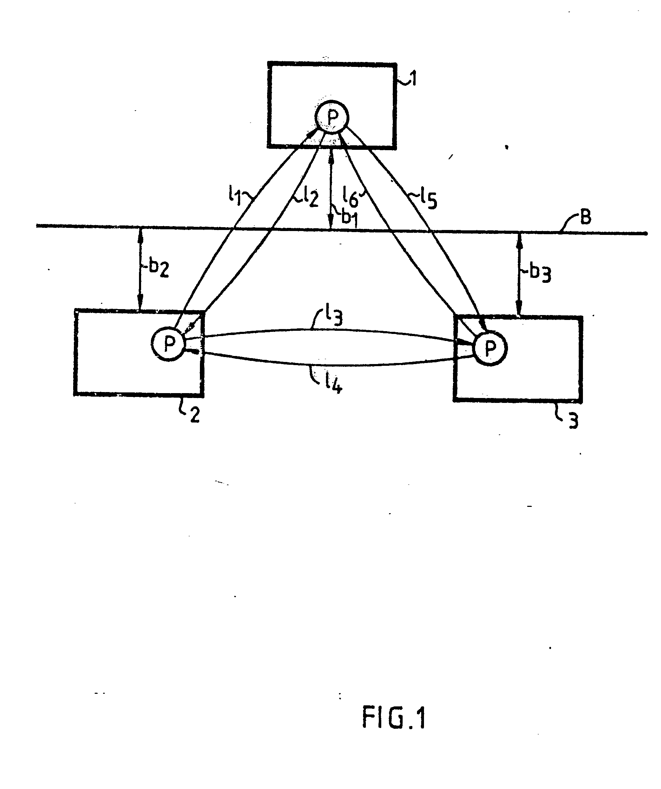

Le système représenté à la figure 1 est composé des unités 1, 2 et 3 reliées chacune à un bus B qui leur est commun, par les liaisons $l_1$, $l_2$, $l_3$. Chaque unité possède une logique de commande munie d'un même circuit de priorité P. Les demandes de chaque unité de prise de la maîtrise du bus B sont transmises à l'ensemble des autres unités par les circuits de priorité P. Ainsi l'unité 1 avertit les unités 2 et 3 qu'elle est demanderesse par les liaisons $l_2$ et $l_5$, l'unité 2 avertit les unités 1 et 3 par les liaisons $l_1$ et $l_3$ et l'unité 3 avertit les unités 1 et 2 par les liaisons $l_4$ et $l_6$.

Naturellement, à un instant donné, seule l'unité demanderesse qui est la plus prioritaire prend la maîtrise du bus B.

Les unités utilisées peuvent être de différents types comme ceci est représenté à la figure 2.

Sur cette figure, le bus B relie des unités de commande de mémoire MMU12, 13 à différentes antémémoires ou caches MCU6 8, ou mémoires tampon MTU4 et MTU10. Les mémoires tampons $MTU_4$ et $MTU_{10}$ relient les contrôleurs d'entrée-sortie IOC 5 et 11 au bus B alors que les caches 6 et 8 relient respectivement les organes de traitement de l'information ou processeurs 7 et 9 au bus B.

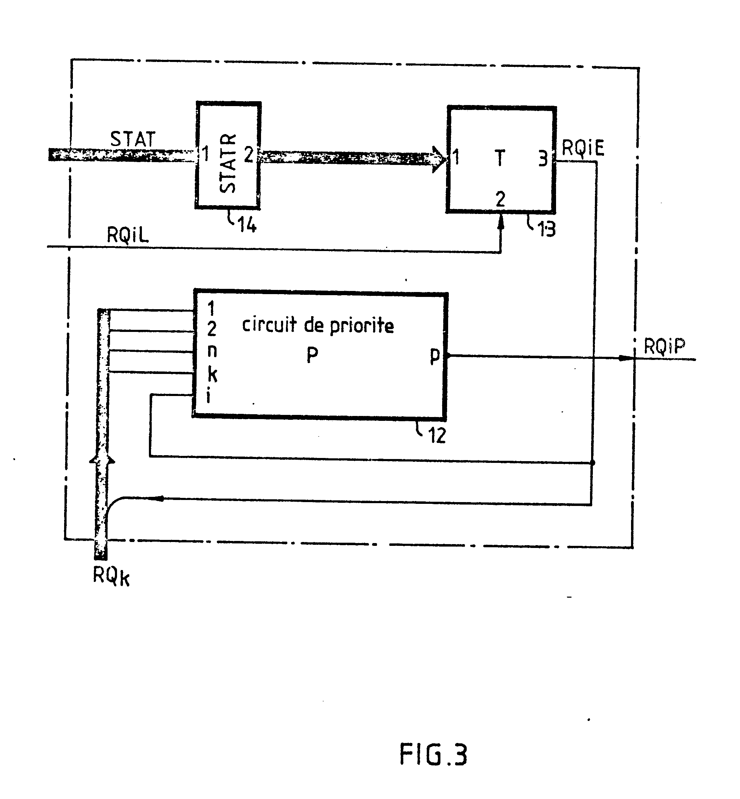

La logique de commande qui est incorporée selon l'invention dans chaque unité est représentée à la figure 3. Cette logique se compose d'un circuit de priorité $P_{12}$, d'un circuit d'éligibilité $T_{13}$ de la demande locale de l'unité dans laquelle le circuit P est situé, et d'un registre STATR14.

Le registre STATR14 reçoit sur son entrée 1 les signaux STAT dont les états représentent la disponibilité des lignes de données du BUS B. La sortie 2 du registre STATR est reliée à l'entrée 1 du circuit d'éligibilité T13 dont l'entrée 2 reçoit la demande $RQ_iL$ locale. Le circuit T délivre sur sa sortie 3 le signal $RQ_iE$ lorsqu'il a pu déterminer que la demande locale était éligible. Le signal $RQ_iE$ est à la fois transmis vers l'entrée i du circuit de priorité P12 et vers les autres logiques de commande des autres unités du système sur la ligne $RQ_k$. Le circuit de priorité P12 délivre sur sa sortie P un signal $RQ_iP$ lorsque la demande locale qui est devenue éligible se trouve être la plus prioritaire, ce signal est alors transmis à l'organe de commande de l'unité locale qui reçoit ainsi l'autorisation de prendre la maîtrise du bus B.

La fonction de la logique de commande est donc de transformer une demande locale en une demande éligible après avoir analysé la disponibilité du bus B de transmission.

La logique de commande reçoit toutes les demandes externes $RQ_k$ sur les entrées I à k du circuit de priorité P12. Les priorités de toutes les demandes externes sont analysées et comparées au niveau de priorité de la demande locale par le circuit de priorité P12. Comme l'analyse s'opère de la même manière dans chaque unité, toutes les unités connaissent ainsi au même instant la demande de l'unité qui est la plus prioritaire.

L'unité qui se reconnaît comme étant la plus prioritaire peut prendre la maîtrise du BUS B par le signal $RQ_i$, P émis par le circuit de priorité P.

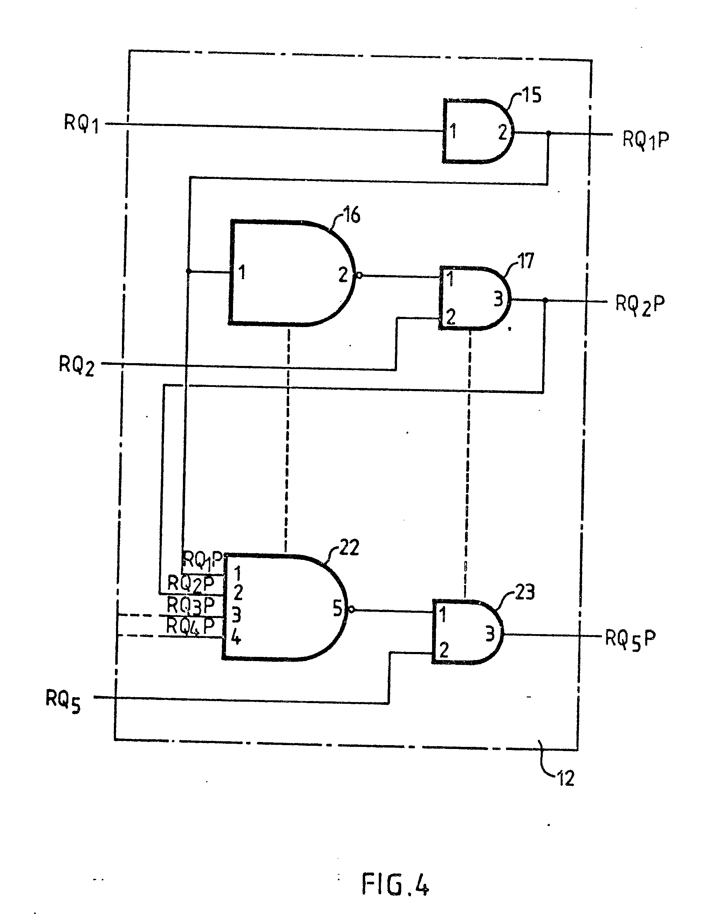

Le circuit de priorité P12 est représenté à la figure 4. Dans l'exemple, ce circuit peut analyser jusqu' à 5 demandes $RQ_1$ à $RQ_5$, mais ce nombre pourrait être facilement généralisé à n. Il se compose de 4 portes non ET 16, 18, 20 et 22, les portes 18 et 20 n'étant pas représentées et de 5 portes »ET« 15, 17, 19, 21 et 23, les portes 19 et 21 n'étant pas représentées.

La demande $RQ_1$ est appliquée à l'entrée 1 d'une porte 15 dont la sortie délivre le signal $RQ_1P$. Le signal $RQ_1P$ est appliqué à l'entrée 1 de toutes les portes »non et« 16 à 22. La sortie 2 de la porte »non et« 16 est appliquée à l'entrée 1 de la porte »et« 17 qui reçoit sur son entrée 2 la demande $RQ_2$ et dont la sortie 3 transmet le signal $RQ_2P$. Ce signal $RQ_2P$ est ensuite transmis à toutes les entrées 2 des portes »non et« 18 à 22. Un cablage identique est à réaliser pour la prise en compte des signaux $RQ_3$ et $RQ_4$ par les circuits non représentés. Le signal $RQ_3P$ obtenu doit être transmis à l'entrée 3 des portes »non et« 20 à 22 et le signal $RQ_4P$ doit être transmis à l'entrée 4 de la porte »non et« 22. La sortie 5 du circuit »non et« 22 est reliée à l'entrée 1 de la porte »et« 23 dont l'entrée 2 reçoit le signal $RQ_5$. La sortie 3 de la porte ET 23 délivre le signal $RQ_5P$. Avec ce circuit, la demande $RQ_5$ est prioritaire dans la mesure où une demande quelconque $RQ_1$ à $RQ_4$ n'est pas présente. Cette condition est vérifiée par l'équation logique:

$$RQ_5P = RQ_5 \cdot (RQ_1P^* + RQ_2P^* + RQ_3P^* + RQ_4P^*)$$

Pour les signaux $RQ_1P$ à $RQ_4P$ les équations suivantes doivent être vérifiées.

$$RQ_4P = RQ_4 \cdot (RQ_1P^* + RQ_2P^* + RQ_3P^*)$$
$$RQ_3P = RQ_3 \cdot (RQ_1P^* + RQ_2P^*)$$
$$RQ_2P = RQ_2 \cdot (RQ_1P^*)$$
$$RQ_1P = RQ_1$$

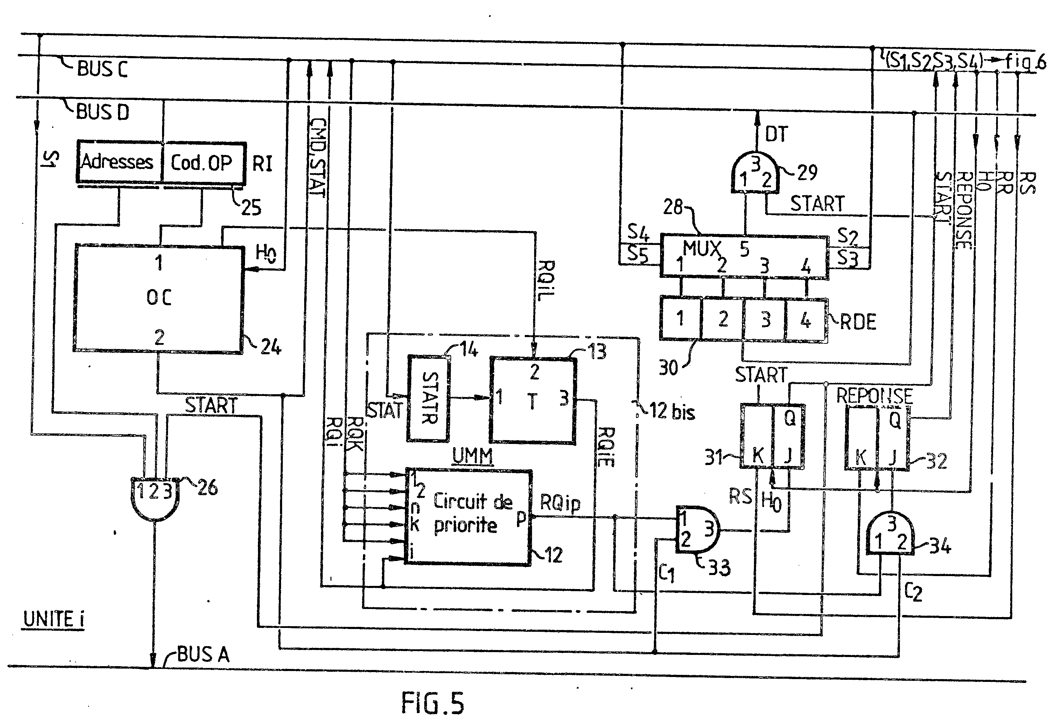

Les liaisons de la logique de commande avec les organes de commande d'une unité quelconque du système sont représentées à la figure 5. Sur cette figure, la logique de commande est représenté en 12 bis. L'unité qui la contient s'organise autour d'un bus d'adresse (BUSA), d'un bus de commande (BUSC) et d'un bus de données (BUSD). Ces différents BUS sont communs avec les éléments correspondants du BUSB. L'organe de commande 24 délivre les signaux de commande nécessaires à la gestion du transfert des informations sur le BUSB lorsque l'unité est devenue maîtresse. Il peut être constitué d'une mémoire morte dans laquelle on aura inscrit le microprogramme nécessaire au séquencement des informations sur le bus B, il sera possible d'utiliser un organe de commande du type de celui qui est décrit dans le livre intitulé »Microprogramming Principles and Practices« Samir S HUSSON-Prentice Hall Inc (1970) Page 189.

L'organe de commande délivre les signaux CMD et STAT sur le BUSC, les commandes $C_1$ et $C_2$ ainsi que le signal de demande locale $RQ_iL$. Il est synchronisé à partir d'une horloge HO commune à tout le système mais non représentée. Un registre d'instruction RI 25 connecté entre l'entrée 1 de l'organe de commande et le bus D permet le branchement sur l'adresse de début des microprogrammes contenus dans l'organe de commande. Cette adresse de début est calculée à partir du code opération de l'instruction contenue dans le registre d'instruction RI.

Les signaux STAT transitent sur le bus C et sont reçus à l'entrée du registre STATR de la logique de commande 12bis. La demande locale $RQ_iL$ est également transmise à l'entrée 2 du circuit T13 de la logique de commande 12bis. Sur le BUSC transitent aussi toutes les demandes RQ faites par les autres unités du système, celles-ci sont appliquées aux entrées 1 à k du circuit de priorité P12 de la logique de commande 12bis. Lorsque l'unité se reconnaît comme étant la prioritaire vis-à-vis des autres demanderesses sa logique de commande délivre le signal $RQ_iP$ qui est alors appliqué à l'entrée 1 de la porte ET33.

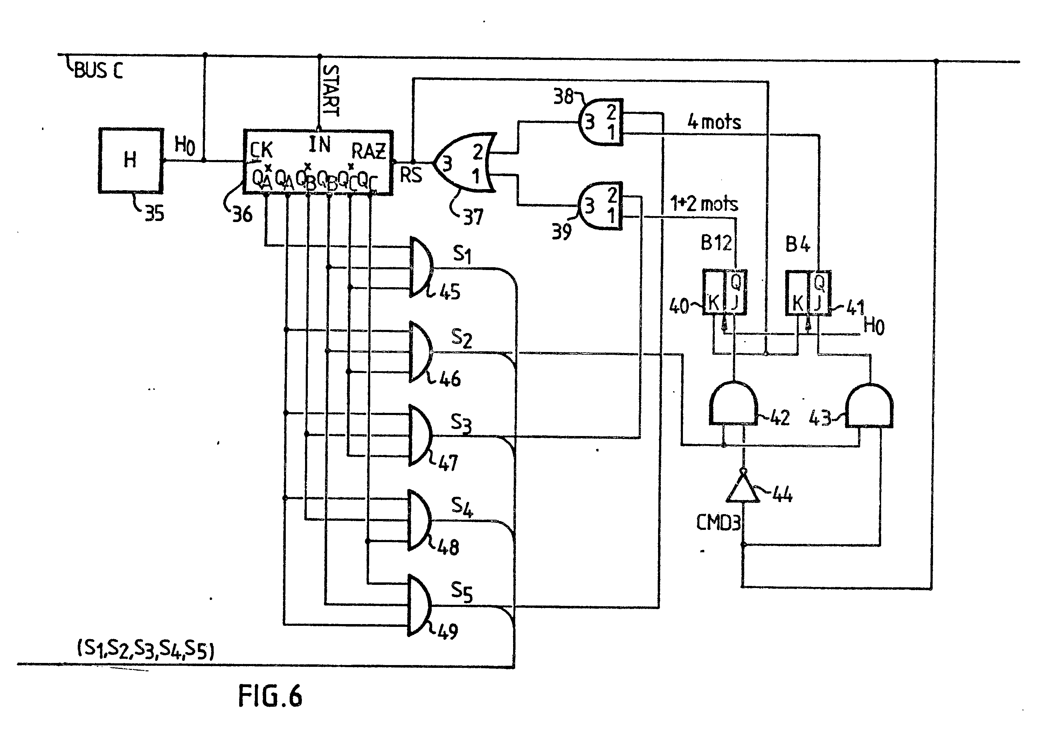

Le signal $RQ_iP$ est ensuite pris en compte par un basculeur START par action du signal de commande $C_1$ sur l'entrée 2 de la porte ET33 ou par un basculeur REPONSE par action d'un signal $C_2$ sur l'entrée 2 de la porte ET34. Les basculeurs START et REPONSE servent à initialiser un transfert d'information entre le BUSB et l'unité dans laquelle ils se trouvent. Ces basculeurs sont remis à zéro respectivement par les signaux RS et RR transmis sur le BUSC. Les signaux START et REPONSE correspondant sont naturellement émis sur le BUSC. Le registre RDE30 est un registre de données; dans l'exemple, ce registre peut contenir 4 bytes. Ces 4 bytes sont chargés directement à partir du BUSD et peuvent être déchargés sur une longueur quelconque sur le BUSD par le multiplexeur MUX28 commandé par des signaux de cycle $S_2$, $S_3$, $S_4$ et $S_5$ émis par un séquenceur interne à l'unité du type représenté à la figure 6. Le déchargement a lieu au cours d'une phase de transfert START et est commandé par le signal START appliqué sur l'entrée 2 d'une porte 29 dont l'entrée 1 se trouve reliée à la sortie 5 du multiplexeur MUX28. Comme une instruction contient toujours une adresse, l'adresse contenue dans le registre RI est transférée sur le bus d'adresse BUSA au travers de la porte ET26 dont l'entrée 2 est reliée à la zone d'adresse du registre d'instruction, cette porte est commandée par un signal de cycle $S_1$ émis par le séquenceur interne à l'unité du type représenté à la figure 6 et le signal START.

Les phases START et REPONSE ont lieu au cours de l'exécution d'opérations élémentaires d'échange d'informations sur le BUS B. Une opération peut être définie comme un travail élémentaire que doit exécuter une unité, ce peut être par exemple une opération de lecture ou d'écriture de mémoire. Suivant sa nature, une opération peut s'exécuter en une ou deux phases séparées. Lorsqu'une opération demande deux phases la première est la phase »START« et la deuxième est la phase »REPONSE«. Ces phases sont déclenchées à l'aide des basculeurs correspondant de la figure 5.

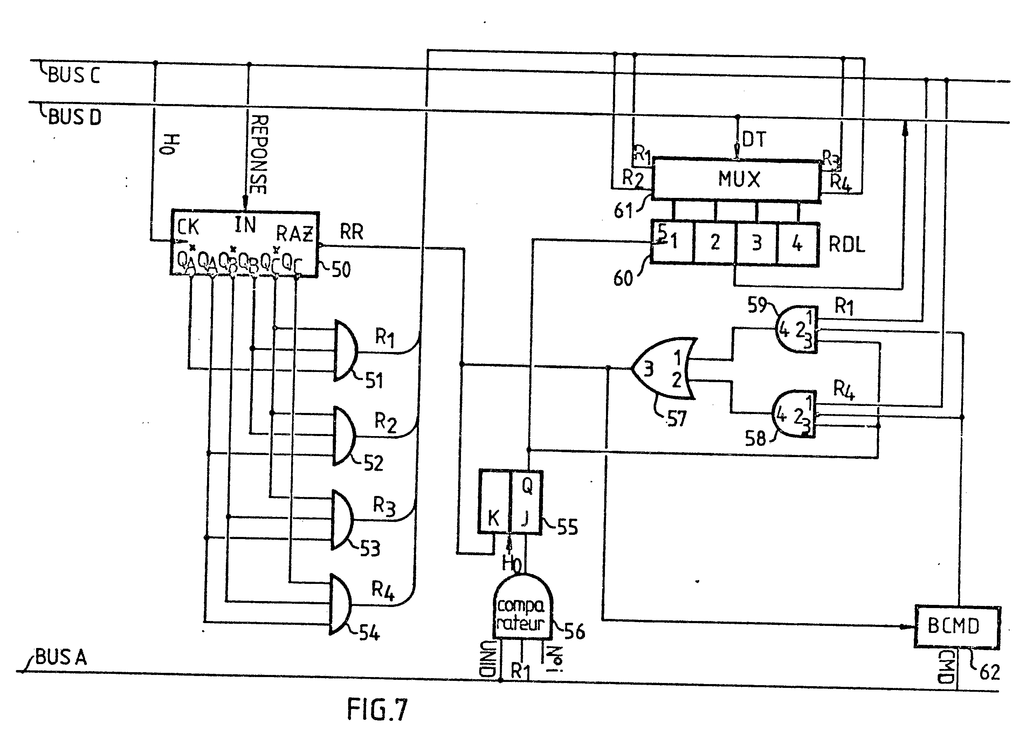

L'intervalle de temps qui sépare une phase START d'une phase REPONSE d'une même opération pourra judicieusement être utilisée pour effectuer d'autres opérations. Naturellement une phase START ou une phase REPONSE nécessite pour son exécution un temps plus ou moins grand suivant la nature de l'opération correspondante, ce temps est mesuré à partir du cycle élémentaire de l'horloge Ho du système. Les phase START et REPONSE vont donc s'exécuter en fonction du type d'opération effectué en un nombre de cyles d'horloge du système plus ou moins important. Cette exécution est donc synchronisée à l'aide des sequenceurs des figures 6 et 7. La figure 6 représente le séquenceur utilisé dans chaque unité pour exécuter une séquence START. Il se compose d'un compteur binaire 36 à 3 basculeurs. Ce compteur progresse au rythme du signal d'horloge Ho du système appliqué sur son entrée $C_K$. Sa progression est commandée par le signal START émis par le basculeur START. Les états de ce compteur sont transmis à l'entrée des portes ET 45 à 49 qui décodent de façon classique les cycles $S_1$ à $S_5$ de la phase START. Dans une phase START, l'unité émet des données à destination d'une autre unité. Cette émission peut avoir lieu sur un ou plusieurs mots. Pour une émission de un ou deux mots le basculeur B12 est positionné et active l'entrée 1 de la porte ET39. Pour une émission sur quatre mots, la bascule B4 est positionnée et active l'entrée 1 de la porte ET38. Les sorties 3 des portes 39 et 38 sont appliquées respectivement aux entrées 1 et 2 d'une porte OU37 dont la sortie 3 délivre le signal R5 de remise à zéro du compteur 36.

Les entrés 2 des portes 38 et 39 reçoivent respectivement les signaux S5 et S3 délivrés par les portes 47 et 49. Ainsi, une séquence START qui nécessite un transfert de 1 ou 2 mots se terminera à la fin du cycle S3 alors que celle qui aura nécessité un transfert de 4 mots prendra fin à la fin du cycle $S_5$. La décision de la longueur du transfert est naturellement prise par l'organe de commande qui délivre les signaux CMD.

4

## 0 032 862

L'état des signaux CMD détermine la mise en position du basculeur B12 ou du basculeur B4, lorsque $CMD_3 = 1$ le basculeur B4 prend l'état 1 alors que lorsque CMD3 = 0 c'est le basculeur B12 qui prend l'état 1, cette commande a lieu pendant le cycle $S_2$ du séquenceur.

La figure 7 représente le séquenceur utilisé dans chaque unité pour exécuter une séquence REPONSE. Il se compose d'un compteur binaire 50 à 3 basculeurs. Ce compteur progresse au rythme du signal d'horloge $H_o$ appliqué sur son entrée $C_k$. La progression est commandée par le signal REPONSE émis par le basculeur REPONSE. Les états de ce compteur sont transmis à l'entrée des portes ET51 à 54 de façon à décoder les cycles $R_1$ à $R_4$. Dans une séquence REPONSE, l'unité reçoit des données provenant d'une autre unité. La réception peut porter sur un ou plusieurs mots suivant la longueur du transfert défini par le champ CMD. Ce champ CMD a été transmis par l'unité qui a initialisé la séquence START et a été mémorisé dans le registre BCMD62. L'unité qui exécute une séquence réponse, répond à l'unité demanderesse en lui retournant son numéro d'identification UNID, ce qui permet à l'unité demanderesse d'identifier le message REPONSE qui lui est transmis. Cette identification a lieu dans le comparateur 56 qui compare pendant le cycle $R_1$ le numéro UNID transmis par le répondeur au numéro i d'identification de l'unité. S'il y a identité entre les numéros, le message REPONSE concerne l'unité, le basculeur 55 est positionné à l'état 1, l'entrée des portes ET 58 et 59 ainsi que l'entrée 5 du registre de données RDL sont validées. Pour une réponse portant sur un mot, le compteur 50 est remis à zéro à la fin du cycle $R_1$ par la sortie de la porte OU57 dont l'entrée 1 est commandée par la sortie 4 de la porte ET59 dont les entrées sont commandées par le champ CMD le signal $R_1$ et la sortie Q du basculeur 55. Le mot DT transmis est alors mémorisé dans la zone 1 du registre RDL60. Pour une réponse portant sur quatre mots, les mots sont successivement mémorisés dans les zones 1 à 4 du registre RDL60 au rythme des cycles $R_1$ à $R_4$, au travers du multiplexeur 61. Le compteur 50 est remis à zéro à la fin du cycle $R_4$ par l'action de la porte 58 sur la porte OU57.

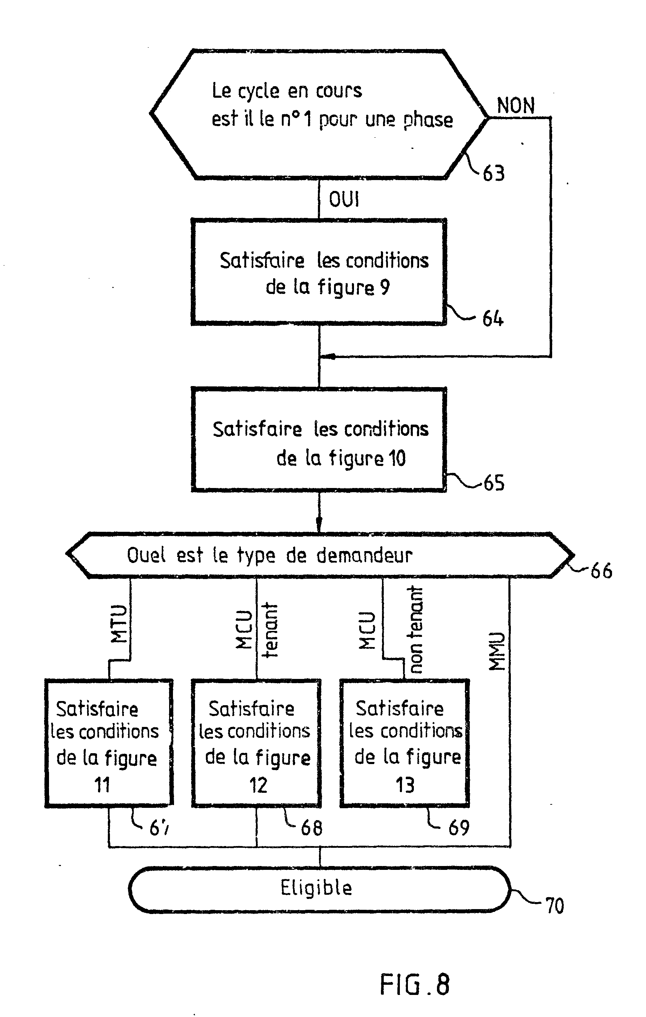

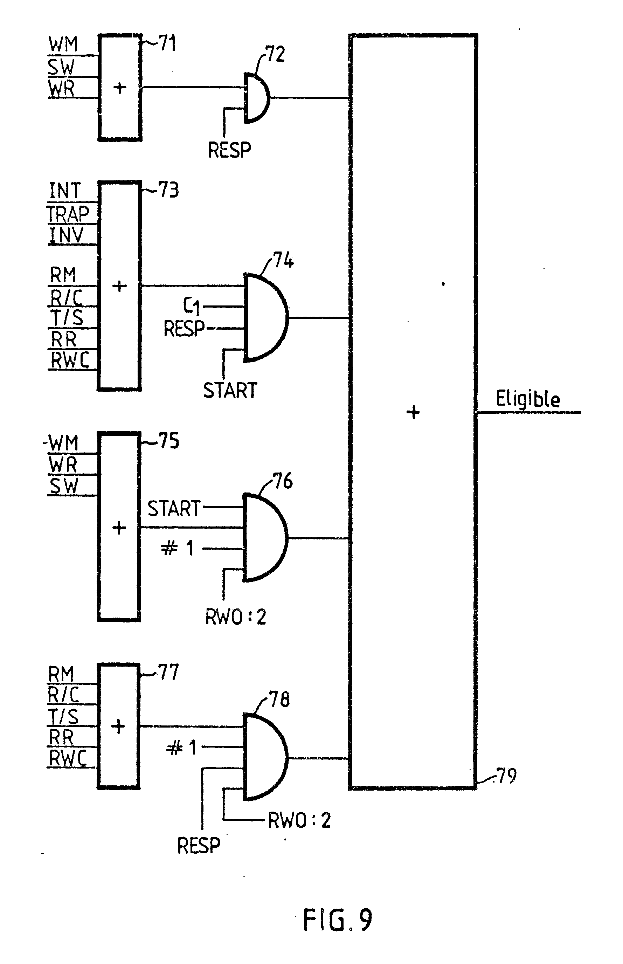

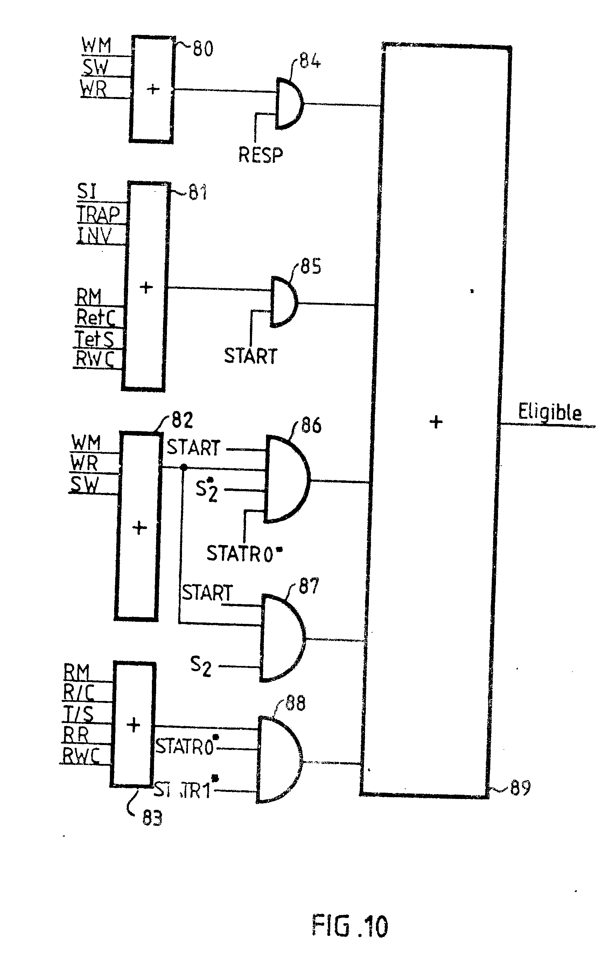

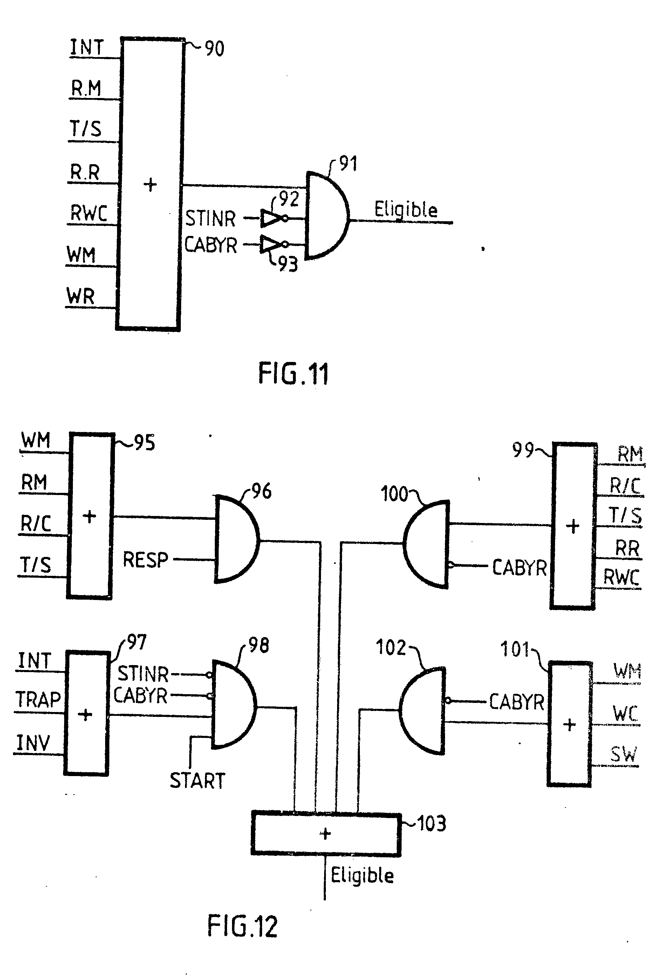

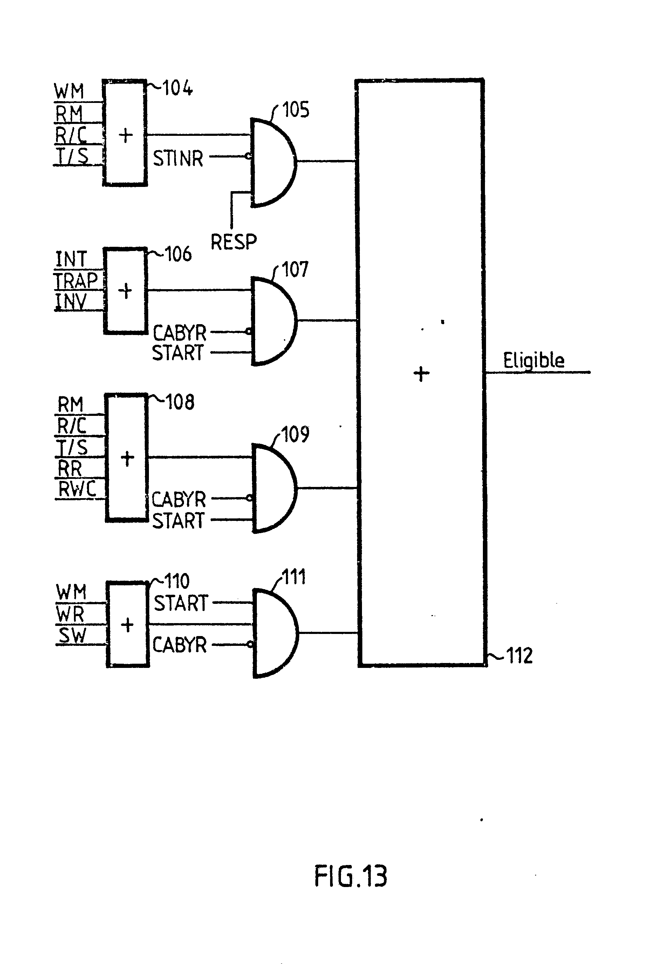

Le diagramme de la figure 8 illustre les opérations qu'une unité doit nécessairement effectuer pour élire une demande locale en fonction de sa spécialisation dans le système. Si la demande locale se produit au cours du cycle 1 d'une phase (étape 63) la demande locale sera éligible si elle satisfait aux conditions logiques représentées sur la figure 9 (Etape 64). Puis elle devra nécessairement satisfaire aux conditions logiques représentées à la figure 10. Dans les autres cycles, autres que le cycle 1, l'étape 64 n'est pas à effectuer, par contre l'étape 65 est toujours réalisée quel que soit le cycle d'une phase. Ensuite en fonction du type de demandeur l'une ou l'autre des étapes 67, 68 au 69 est exécutée. Si le demandeur est un contrôleur d'entrée-sortie, la demande doit satisfaire les conditions logiques montrées à la figure 11. Si le demandeur est un cache une differenciation est faite suivant le cas où ce cache est tenant ou non. S'il est tenant, la demande doit satisfaire les conditions logiques de la figure 12, par contre s'il n'est pas tenant il doit satisfaire celles de la figure 13.

On remarquera suivant le diagramme de la figure 8 qu'une demande locale d'une unité de mémori-sation MMU est toujours éligible sans conditions. Les conditions logiques et leur cablage correspondant illustrés par les figures 9 à 13 ne sont donnés qu'à titre d'exemple et ne revêtent pas un caractère absolu, elles dépendent en fait de la structure physique des unités constituant le système de la figure 2.

Sur la figure 9, le circuit OU71 et la porte ET72 indiquent que les demandes locales, d'écriture en mémoire MMU (WM) de (SWAPPING) (SW) ou d'écriture dans des registres (WR) ne sont éligibles sans condition s'il s'agit d'une phase REPONSE. Les circuits 73 et 74 indiquent que les demandes locales d'Interruption (INT) de TRAP (TRAP), d'invalidation (INV), de lecture de mémoire (RM) de l'écriture et d'effacement (R/C) de test (T/S), de lecture de registre (R/R), de lecture sans comparaison ne sont éligibles s'il s'agit de phase START, que pendant le cycle 1 d'une REPONSE. Les circuits 75 et 76 indiquent que les demandes locales d'écriture en mémoire WM, d'écriture dans des registres WR et de SWAPPING ne sont éligibles s'il s'agit d'une phase START que pendant le cycle 1 d'une réponse d'écriture. Les circuits 77 et 78 indiquent que les demandes locales de lecture en mémoire (RM), de lecture et d'effacement (RC) de test (T/S) de lecture de registre (R/R) et de lecture dans comparaison (RWC) ne sont éligibles s'il s'agit de REPONSE que durant le cycle 1 d'une réponse d'écriture.

Les circuits de la figure 10 réalisent les conditions nécessaires pour rendre éligible les demandes locales en fonction de l'état des lignes de données. L'état des lignes de données est connu par la valeur du contenu du registre STATR. Ce registre est constitué de deux basculeurs. L'état de ce registre est lu pendant n'importe quel cycle, un état 00 au cycle n signifie que les lignes de données deviennent disponibles au cycle n + 1, l'état 01 les rend disponibles au cycle n + 2, l'état 10 les rend disponibles au cycle n + 3 et l'état 11 les rend disponibles au cycle n + 4. Le cablage des circuits de la figure 10 correspond à la table de vérité suivante:

| | Type de demande locale | STATR 0 : 2 |
|---|---|---|
| Réponse | Ecriture mémoire (WM)<br>Swapping (SW)<br>Ecriture de registre (WR) | Indifférent |
| START | Interruption (INT)<br>TRAP (TRAP)<br>Invalidation (INV) | Indifférent<br>Indifférent<br>Indifférent |
| START | Lecture de mémoire (RM)<br>Lecture effacement (RC)<br>Test et Marquage (TS)<br>Lecture de registre (RR)<br>Lecture sans comparaison (RWC) | Indifférent<br>Indifférent<br>Indifférent<br>Indifférent<br>Indifférent |
| START | Ecriture mémoire<br>Ecriture registre<br>Swapping<br>  cycle différent du cycle No 2 d'un START<br>  cycle No 2 d' un START | 0 x<br><br><br>Jamais éligible |
| RESP | Lecture mémoire (RM)<br>Lecture et effacement (RC)<br>Test et marquage T/S<br>Lecture de registre<br>Lecture sans comparaison | 00 |

La table de vérité suivante permet de rendre éligible les demandes locales d'un contrôleur d'entrée sortie (MTU).

Le circuit logique correspondant est montré à la figure 11.

| | Type de demande | STINR | CABYR |
|---|---|---|---|
| START | Interruption (INT) | 0 | 0 |
| START | Lecture de mémoire (RM)<br>Test et marquage (T/S)<br>Lecture de registre (RR)<br>Lecture sans<br>comparaison (RWC) | 0 | 0 |
| START | Ecriture en mémoire (WM)<br>Ecriture en registre (WR) | 0 | 0 |

STINR = 1 interdit l'émission des signaux START.

La table de vérité suivante permet de rendre éligible les demandes locales émises par une unité de mémoire cache lorsqu'elle est tenante. Le circuit logique correspondant est représenté à la figure 12.

| | Type de demandes | STINR | CABYR |
|---|---|---|---|
| RESP | Ecriture Mémoire (WM)<br>Lecture Mémoire (RM)<br>Lecture et effacement (RC)<br>Test et marquage (T/S) | x | x |
| START | Interruption (INT)<br>TRAP (TRAP)<br>Invalidation (INV) | 0 | 0 |
| START | Lecture Mémoire (RM)<br>Lecture et effacement (RC)<br>Test et marquage (T/S)<br>Lecture de registre (RR)<br>Lecture sans comparaison (RWC) | 0 | 0 |
| START | Ecriture Mémoire (WM)<br>Ecriture de registre (WR)<br>Swapping (SW) | 0 | 0 |

La table de vérité suivante permet de rendre éligible les demandes locales émises par une unité de mémoire cache non tenante. Le circuit logique correspondant est représenté sur la figure 13.

| | Type de demandes | STINR | CABYR |
|---|---|---|---|
| RESP | Ecriture Mémoire (WM)<br>Lecture Mémoire (RM)<br>Lecture et effacement (RC)<br>Test et marquage (T/S) | 0 | x |
| START | Interruption (INT)<br>TRAP (TRAP)<br>Invalidation (INV) | 0 | 0 |
| START | Lecture Mémoire (RM)<br>Lecture et effacement (RC)<br>Test (T/S)<br>Lecture de registre (RR)<br>Lecture sans comparaison (RWC) | 0 | 0 |
| START | Ecriture Mémoire (WM)<br>Ecriture de registre (WR)<br>Swapping (SW) | 0 | 0 |

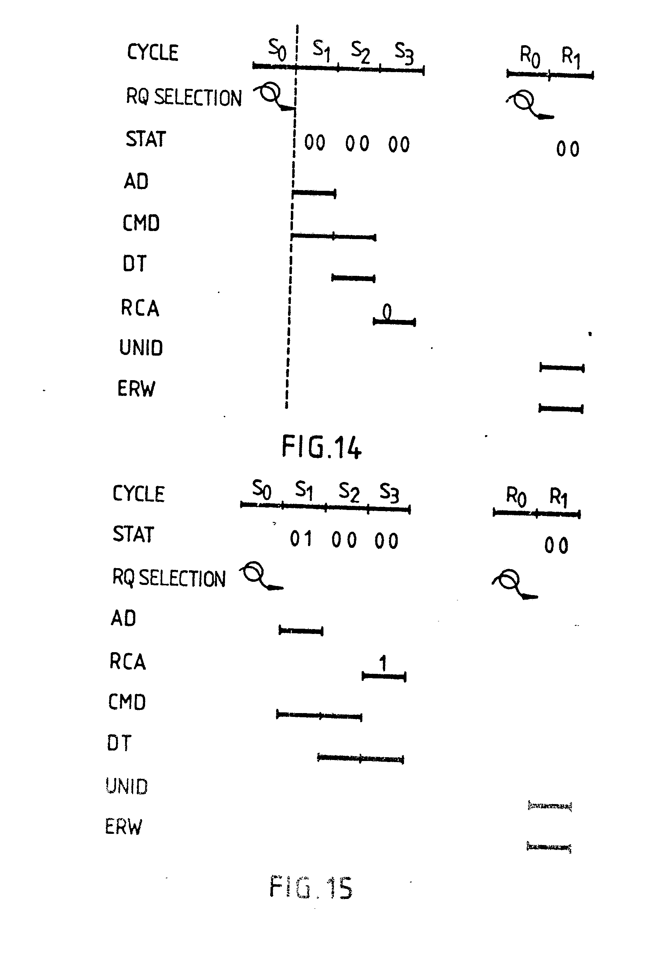

Le fonctionnement du dispositif selon l'invention est illustré par les diagrammes de temps des figures 14 à 17. Sur la figure 14, l'unité prioritaire effectue une écriture d'un mot de données dans une unité de mémoire MMU. Sa logique de commande démarre une phase START comprenant les cycles élémentaires $S_0$ à $S_3$. Durant le cycle $S_1$ l'adresse de la mémoire est envoyée par l'unité élue sur les lignes d'adresse du BUSA et le mot de commande CMD est également émis par l'organe de commande de l'unité pour signaler à l'unité de mémoire qu'une opération d'écriture est demandée.

Durant le cycle $S_2$, le champ CMD est de nouveau émis sur les lignes de commande du BUS B pour signaler à l'unité de mémoire qu'une opération d'écriture d'un mot est demandée et le mot de donnée DT est transmis par l'unité prioritaire vers l'unité de mémoire MMU.

La réponse de l'unité de mémoire MMU intervient lorsque celle-ci devient à son tour prioritaire. Elle s'effectue selon la figure 14 en deux cycles $R_0$ et $R_1$. Durant le cycle $R_1$, le mot UNID d'identification de l'unité qui attend la réponse est émis sur les lignes de commandes et un code de contrôle d'erreur est envoyé afin de vérifier que l'écriture s'est effectuée dans de bonnes conditions.

7

La figure 15 représente un cycle d'écriture de deux mots dans une unité cache. Comme il s'agit d'une écriture de deux mots le signal STAT à la valeur 01 au cycle $S_1$ puis la valeur 00 au cycle $S_2$, le transfert des données a lieu pendant les cycles $S_2$ et $S_3$. La réponse a lieu comme précédemment.

La figure 16 correspond à une opération d'écriture dans une mémoire MMU de 4 mots. Dans ce cas, STAT a la valeur 11 du cycle $S_1$, 10 au cycle $S_2$, 01 au cycle $S_3$ et 00 au cycle $S_4$, le transfert des 4 mots a lieu pendant les cycles $S_2$ à $S_5$. La réponse a lieu comme précédemment.

La figure 17 représente un cycle de lecture d'une unité de mémoire MMU. La phase STAT est exécutée pour adresser la mémoire pendant le cycle $S_1$, et commander la lecture au cycle $S_1$ ainsi que la longueur du transfert pendant le cycle $S_2$. Dans l'exemple de la figure 17, il s'agit d'une lecture de 4 mots en mémoire. Ces 4 mots sont transférés vers l'unité demanderesse pendant l'exécution de la phase REPONSE de la mémoire MMU. Au cycle $R_1$, STAT est placé dans l'état 10 pour signaler que les lignes de données seront disponibles après le cycle R4.

Un exemple de multiplexage dans le temps et dans l'espcace des lignes d'adresse et de données est représenté à la figure 18. Sur cette figure la première phase (Phase 1) représentée est une phase START d'écriture de 3 mots de données. Le cycle 1 est utilisé pour l'émission du champ d'adresse et les 3 cycles suivants sont utilisés pour l'émission des 3 champs de données. A la fin du cycle 4 les lignes de données vont être disponibles, l'ensemble des unités en sera averti par l'état des lignes STAT. Dans ces conditions, une autre phase pourra être exécutée, ce sera par exemple une phase START d'écriture d'un mot. Cette phase START pourra commencer par l'envoi du champ d'adresse pendant le cycle 4 de la phase précédente puisqu'à cette époque les lignes d'adresse correspondantes sont libres. A la fin du cycle 2 de la deuxième phase représentée les lignes de données sont à nouveau disponibles, il sera alors possible d'exécuter une phase 3 REPONSE de lecture de 3 mots, etc. On voit donc que grâce à la superposition des phases START et RESPONSE il est possible d'obtenir des cycles jointifs de transfert de données sur le bus de transmission.

## Revendications

1. Dispositif pour superposer les phases successives du transfert des informations sur un bus de transmission comprenant des champs d'adresses de données et e commande et commun à plusieurs unités d'un système de traitement de l'information, les unités pouvant être constituées par des processeurs individuels ainsi que par des mémoires auxquelles chaque processeur est connectable, chaque unité possédant:

— un organe de commande (24) générant des signaux d'occupation du bus selon l'opération effectuée par l'unité durant une phase;
— une logique de commande (12bis) pour lui permettre d'obtenir la maîtrise du bus de transmission lorsqu'elle est sollicitée par une demande locale, la dite logique de commande comprenant un circuit de priorité (12) et un circuit d'éligibilité (13) de sa demande locale générant un signal de demande élue (RQE); le dit circuit de priorité ayant une de ses entrées reliée à une sortie de son propre circuit d'éligibilité pour lui permettre d'accorder la maîtrise du bus de transmission à son unité lorsqu'il reconnaît la demande élue de son unité comme prioritaire par rapport aux demandes émises par les autres unités,

caractérisé:

— en ce que l'organe de commande d'une unité utilisant le bus envoie à l'avance un signal de satut (STAT) définissant l'utilisation des champs du bus par l'unité pour les cycles suivants d'une même phase;
— en ce que le circuit d'éligibilité d'une unité élit la demande locale ($RQ_iL$) de l'unité en fonction du type de cette demande et du signal de statut (STAT);
— en ce que chaque unité comprend un premier générateur de cycle (Fig. 6) pour déclencher une opération (START) dans cette unité et un deuxième générateur (Fig. 7) pour déclencher une opération de réponse à destination d'une autre unité qui l'a précédemment interrogée, chacun des générateurs de cycle étant déclenché par le circuit de priorité (12) de la dite unité.

2. Dispositif pour superposer les phases succesives du transfert des informations entre plusieurs unités d'un système de traitement de l'information selon la revendication 1, caractérisé en ce que le premier cycle du premier générateur de cycle est utilisé à la localisation de l'information dans l'unité appelée et la définition du type d'opération que l'unité appelée doit effectuer.

3. Dispositif pour superposer les phases succesives du transfert des informations entre plusieurs unités d'un système de traitement de l'information selon les revendications 1 et 2, caractérisé en ce que le second cycle du premier générateur de cycle est utilisé pour l'émission de la longueur des informations à transmettre sur le bus de transmission.

4. Dispositif pour superposer les phases successives du transfert des informations entre plusieurs unités d'un système de traitement de l'information selon l'une quelconque des revendications 1 à 3, caractérisé en ce que le premier cycle du deuxième générateur de cycle est utilisé à l'émission de l'adresse de l'unité pour laquelle la réponse est destinée.

## Patentansprüche

1. Vorrichtung zum Überlagern der aufeinanderfolgenden Phasen der Informationsüberführung auf einem Übertragungsbus, der ein Adressenfeld, ein Datenfeld und ein Steuerfeld umfaßt und mehreren Einheiten eines Informationsverarbeitungssystems gemeinsam ist, wobei diese Einheiten durch einzelne Prozessoren sowie durch Speicher gebildet sein können, mit denen jeder Prozessor verbindbar ist, wobei jede Einheit aufweist:

— ein Steuerorgan (24), das Busbelegungssignale gemäß der von der Einheit während einer Phase ausgeführten Operation erzeugt;
— eine Steuerlogik (12bis), die es ihr ermöglicht, die Herrschaft über den Übertragungsbus zu erlangen, wenn sie durch eine lokale Anforderung angesprochen wird, wobei diese Steuerlogik eine Prioritätsschaltung (12) und eine Wählbarkeit-Schaltung (13) für ihre lokale Anforderung umfaßt, welche ein Gewählte-Anforderung-Signal (RQE) erzeugt; wobei die Prioritätsschaltung mit einem ihrer Eingänge an einen Ausgang ihrer eigenen Wählbarkeit-Schaltung angeschlossen ist, um ihr zu gestatten, ihrer Einheit die Herrschaft über den Übertragungsbus zu erteilen, wenn sie die ausgewählte Anforderung ihrer Einheit als solche mit höherer Priorität als die von den anderen Einheiten ausgegebenen Anforderungen erkennt,

dadurch gekennzeichnet,

— daß das Steuerorgan einer den Bus benutzenden Einheit im voraus ein Zustandssignal (STAT) abgibt, das die Benutzung der Busfelder durch die Einheit für die darauffolgenden Zyklen derselben Phase definiert;
— daß die Wählbarkeit-Schaltung einer Einheit die lokale Anforderung (RQ$_i$L) der Einheit in Abhängigkeit von dem Typ dieser Anforderung und von dem Zustandssignal (STAT) auswählt;
— daß jede Einheit einen ersten Zyklusgenerator (Fig. 6) umfaßt, um eine Operation (START) in dieser Einheit auszulösen, und einen zweiten Generator (7) umfaßt, um eine Antwortoperation auszulösen, die für eine andere Einheit bestimmt ist, welche sie zuvor abgefragt hat, wobei jeder dieser Zyklusgeneratoren durch die Prioritätsschaltung (12) der genannten Einheit ausgelöst wird.

2. Vorrichtung zum Überlagern der aufeinanderfolgenden Phasen der Informationsüberführung zwischen mehreren Einheiten eines Informationsverarbeitungssystems, nach Anspruch 1, dadurch gekennzeichnet, daß der erste Zyklus des ersten Zyklusgenerators für die Lokalisierung der Information in der aufgerufenen Einheit und die Definition des Operationstyps, den die aufgerufene Einheit durchführen soll, verwendet wird.

3. Vorrichtung zum Überlagern der aufeinanderfolgenden Phasen der Informationsüberführung zwischen mehreren Einheiten eines Informationsverarbeitungssystems, nach den Ansprüchen 1 und 2, dadurch gekennzeichnet, daß der zweite Zyklus des ersten Zyklusgenerators zum Aussenden der Länge der über den Übertragungsbus zu überführenden Informationen verwendet wird.

4. Vorrichtung zum Überlagern der aufeinanderfolgenden Phasen der Informationsüberführung zwischen mehreren Einheiten eines Informationsverarbeitungssystems, nach einem der Ansprüche 1 bis 3, dadurch gekennzeichnet, daß der erste Zyklus des zweiten Zyklusgenerators für das Aussenden der Adresse der Einheit verwendet wird, für welche die Antwort bestimmt ist.

## Claims

1. Device for superposing the successive phases of the transfer of data on a transmission bus comprising data address and control sections and common to several units of a data processing system, the units being able to be formed by individual processors as well as by memories to which each processor may be connected, each unit having:

— a control element (24) generating bus occupation signals depending on the operation performed by the unit during a phase;
— a control logic (12b) enabling it to gain control over the transmission bus when it is acted upon by a local call, the said control logic comprising a priority circuit (12) and an eligibility circuit (13) for its local call generating an elected call signal (RQE); the said priority circuit having one of its inputs connected to an output of its own elegibility circuit to enable it to confer control over the transmission bus to its unit when it recognises the call elected but its unit as having priority compared to the cells transmitted by the other units; characterised in that the control element of a unit utilising the bus initially transmits a status signal (STAT) defining the utilisation of the sections of the bus by the unit for the following cycles of one and the same phase;

— in that the eligibility circuit of an unit elects the local call ($RQ_iL$) of the unit as a function of the nature of this call and of the status signal (STAT);

— in that each unit comprises a first cycle generator (Fig. 6) for triggering an operation (START) in this unit, and a second generator (Fig.7) for triggering a response operation intended for another unit which had interrogated it beforehand, each of the cycle generators being triggered by priority circuit (12) of the said unit.

2. Device for superposing the successive phases of the transfer of data between several units of a data processing system according to claim 1, characterised in that the first cycle of the first cycle generator is utilised for locating the information in the unit called and for defining the kind of operation which is to be performed by the unit called.

3. Device for superposing the successive phases of the transfer of data between several units of a data processing system according to claims 1 and 2, characterised in that the second cycle of the first cycle generator is utilised for transmission of the lenght of the data to be transmitted on the transmission bus.

4. Device for superposing the successive phases of the transfer of data between several units of a data processing system according to any one of claims 1 to 3, characterised in that the first cycle of the second cycle generator is utilised for transmission of the address of the unit for which the response is intended.

FIG.1

FIG.2

FIG.3

FIG.4

FIG.5

RS
RR
H0
REPONSE
START
(S1,S2,S3,S4) → fig.6

BUS C
BUS D
S1

Adresses | Cod.OP | RI
25
H0
OC 1
2
24
START
26 1 2 3
BUS A

CMD, STAT
RQK
RQi

UMM
STATR
STAT
14
T 1 2 3
13
RQiL
RQiE
Circuit de priorité
RQip
P
12
RQi
n
k
i
12 bis

MUX 1 2 3 4 5
28
S4
S5
1 2 3 4
30
RDE
S2
S3
29 DT 1 2 3
START

REPONSE
Q J
K
32
START
Q J
K
31
RS
H0
34 1 2 3 C2
33 1 2 3 C1

UNITE i

19

FIG.6

FIG.7

0 032 862

Le cycle en cours est il le n°1 pour une phase — 63

NON

OUI

Satisfaire les conditions de la figure 9 — 64

Satisfaire les conditions de la figure 10 — 65

Quel est le type de demandeur — 66

MTU

MCU tenant

MCU non tenant

MMU

Satisfaire les conditions de la figure 11 — 67

Satisfaire les conditions de la figure 12 — 68

Satisfaire les conditions de la figure 13 — 69

Eligible — 70

FIG.8

FIG. 9

FIG.10

FIG.11

FIG.12

FIG.13

0 032 862

FIG.14

FIG.15

35

FIG.16

FIG.17

ECRITURE

(START)

PHASE 1

| 1 | 2 | 3 | |
|---|---|---|---|
| Ad | D | D | D |

ECRITURE

(START)

PHASE 2

| A | D | | | |
|---|---|---|---|---|
| 1 | 2 | | | |

LECTURE

REPONSE

PHASE 3

| 1 | 2 | 3 | |
|---|---|---|---|
| D | D | D | |

FIG.18